# EUROPÄISCHE PATENTANMELDUNG

(11) **EP 2 829 347 A1**
(43) Veröffentlichungstag der Anmeldung: **28.01.2015**
(21) Anmeldenummer: 13177949.8
(22) Anmeldetag: 25.07.2013
(51) Int. Cl.: B23H 5/10, B23H 5/04, B23H 9/10, B23H 9/14

(54) **Elektrode, sowie ein Verfahren zum Herstellen einer solchen Elektrode**

(71) Anmelder: Siemens Aktiengesellschaft, 80333 München (DE)
(72) Erfinder: Münzer, Jan, 10439 Berlin (DE); Kamenzky, Susanne, 10713 Berlin (DE)

(57) **Zusammenfassung**

Die Erfindung betrifft eine Elektrode (1,100) zur Bearbeitung eines Werkstücks (50), welche einen dem zu bearbeitenden Werkstück (50) zugewandten Endabschnitt (4,24) mit einer Stirnfläche (5) aufweist, wobei am Endabschnitt (4) zumindest teilweise über die Stirnfläche (5) Schneiden vorgesehen sind, wobei die Schneiden (10) zumindest teilweise einen Schneidstoff (22) umfassen und wobei der Endabschnitt (4) ein zu einem thermischen Abtrag, insbesondere ein zu einem funkenerosiven Abtrag, geeignetes Material (22) umfasst, so dass zumindest ein abrasiver, spanender Abtrag als auch ein thermisch, nichtmechanischer Abtrag des Werkstücks (50) gleichzeitig möglich ist.

## Beschreibung

Die Erfindung betrifft eine Elektrode zur Bearbeitung eines Werkstücks, welche einen dem zu bearbeitenden Werkstück zugewandten Endabschnitt mit einer Stirnfläche aufweist sowie ein Verfahren zum Herstellen einer solchen Elektrode.

Turbinen sind vielfach mit Werkstücken ausgestattet, welche zum Teil sehr komplexe Formen aufweisen, beispielsweise Turbinenschaufeln. Zur Herstellung derartiger Werkstücke kommt immer häufiger das Erodieren zum Einsatz, ein thermisches, abtragendes Fertigungsverfahren für leitfähige Werkstücke, bei dem durch elektrische Entladungsvorgänge zwischen einer Elektrode und dem Werkstück ein Materialabtrag erfolgt. Mit dem Erodieren lassen sich insbesondere komplexe Ausnehmungen ausformen, beispielsweise besonders geformte Nuten, Taschen mit komplexen Querschnittsformen oder ähnliches. Sollen Bohrungen jedoch in keramikbeschichtete Werkstücke unter Zuhilfenahme der Erodiertechnik eingebracht werden, müssen die Bohrungen vor der Beschichtung eingebracht werden und nach dem Bohren mit einem Polymer o.ä. verschlossen bzw. maskiert werden, damit sie beim nachfolgenden Beschichten mit der keramischen Wärmedämmschicht nicht verschlossen werden. Nach Beschichtung mit der Keramik müssen die Rückstände der Maskierung wieder entfernt werden.

Derzeit sind keine industriell verfügbaren Anlagen oder erprobte Technologien bekannt, um mittels Erodiertechnik bzw. direkt auf Erodiermaschinen auch keramikbeschichtete Werkstücke bohren zu können, ohne die Keramikschicht vorher dementsprechend chemisch zu verändern, damit sie elektrisch leitfähig wird. Es können daher derzeit nur metallische bzw. metallisch beschichtete Werkstücke mittels einem elektroerosiven Abtragungsverfahren (Electrical Discharge Machining=EDM) gebohrt werden, da die keramische Wärmedämmschicht nicht elektrisch leitfähig ist.

Es ist daher eine erste Aufgabe der Erfindung, eine Elektrode anzugeben, welches das oben genannte Problem behebt. Eine zweite Aufgabe ist die Angabe eines Verfahrens zum Herstellen einer solchen Elektrode.

Erfindungsgemäß wird die erste Aufgabe mit der Angabe einer Elektrode zur Bearbeitung eines Werkstücks gelöst, welche einen dem zu bearbeitenden Werkstück zugewandten Endabschnitt mit einer Stirnfläche aufweist, wobei am Endabschnitt zumindest teilweise über die Stirnfläche Schneiden vorgesehen sind, wobei die Schneiden zumindest teilweise einen Schneidstoff umfassen und wobei der Endabschnitt ein zu einem thermischen Abtrag, insbesondere zu einem funkenerosiven Abtrag, geeignetes Material umfasst, so dass zumindest ein abrasiver, spanender Abtrag als auch ein thermisch, nichtmechanischer Abtrag des Werkstücks gleichzeitig möglich ist.

Mit der erfindungsgemäßen Elektrode ist eine durchgängige Bearbeitung eines keramisch beschichteten Werkstücks ohne vorausgegangene Maskierung des Werkstücks möglich. Die zumindest teilweise aus Schneidstoff bestehenden Schneiden am Endabschnitt ermöglichen zu Beginn der Bearbeitung durch einen spanenden Abtrag an der rotierenden Elektrode den spanenden Abtrag eines nichtleitenden Werkstücks bzw. dessen nichtleitender Beschichtung. Diese wird dabei in Richtung der Bohrungsachse, welche der Rotationsachse der Elektrode entspricht, bewegt. Ohne Beschränkung der Allgemeinheit wird nachfolgend für ein nichtleitendes beschichtetes Werkstück ein keramisch beschichtetes Werkstück herangezogen. Findet die Bearbeitung in einem Dielektrikum statt, so werden die so spanend abgetragenen Keramikpartikel vom durch und um die Elektrode zugeführten Dielektrikum fortgespült, sowie Elektrode und Werkstück von diesem gekühlt. Da im Endabschnitt der Elektrode zumindest teilweise aus Schneidstoff bestehende Schneiden als auch ein Material zu einem thermischen Abtragen, insbesondere zu einem funkenerosiven Abtrag, vorhanden sind, kann der Erodierprozess im eigentlichen Sinne als thermischer Abtrag starten, sobald die Keramikschicht lokal entfernt - das heißt durchgebohrt - ist. Selbstverständlich kann auch die gesamte Elektrode mit Schneiden versehen sein.

Durch die erfindungsgemäße Elektrode wird zudem beim Verschleiß durch den spanenden Abtrag und den Abbrand bei einer Bohrung durch die Keramikschicht, durch eine zugehörige metallische Haftvermittlerschicht und durch das metallische Werkstück sichergestellt, dass nach der Fertigstellung der Bohrung, bei der nächsten Bohrung wieder genügend Schneiden mit einem Schneidstoff für die Bearbeitung der Keramikschicht, als auch genügend Material zum thermischen Abtrag in der richtigen Geometrie gebunden, zur Verfügung stehen.

Durch die erfindungsgemäße Elektrode wird daher Material, Zeit und Arbeit gespart.

Durch das gleichzeitige Vorhandensein der Schneiden sowie einem zu einem thermischen Abtrag geeigneten Material ist ein abrasiver, spanender Abtrag der Keramikschicht als auch ein thermisch, nichtmechanischer Abtrag des Werkstücks gleichzeitig möglich. Mit der erfindungsgemäßen Elektrode können auf einer Erodiermaschine durch die Kombination aus einem spanenden und einem abtragenden Fertigungsverfahren, in einem Zweischrittverfahren beispielsweise Kühlluftbohrungen in ein heißgasführendes Werkstück mit einer elektrisch nicht leitenden keramischen Wärmedämmschicht gebohrt werden. Die Bearbeitungszeit wird aufgrund der vereinfachten technischen Abläufe und der verschlankten Logistik verkürzt.

Bevorzugt umfasst die Elektrode zum thermisch, nichtmechanischen Abtrag des Werkstücks als Material ein elektrisch gut leitfähiges Metall mit relativ hohem Schmelzpunkt. In bevorzugter Ausgestaltung umfasst das Material ein Hartmetall, insbesondere eine Wolfram-Kupfer-Legierung. Der Schneidstoff umfasst bevorzugt einen Werkzeugstahl und/oder eine Schneidkeramik, und/oder Korund oder und/oder Diamant. Das Material und der Schneidstoff eignen sich besonders gut zum Bearbeiten von Keramikschichten.

Bevorzugt umfasst der Endabschnitt einen Endabschnittumfang, an welchem Schneiden vorgesehen sind. Damit lässt sich ein besonders gutes und schnelles Abtragergebnis der Keramik erzielen.

In bevorzugter Ausgestaltung umfassen der Schneidstoff und das Material dasselbe Hartmetall. Dies vereinfacht die Herstellung der Elektrode z.B. durch Sintern.

Bevorzugt sind die Schneiden geometrisch bestimmte Schneiden. Dies liegt beispielsweise vor, wenn die Schneidenanzahl und/oder die Lage zum Werkstück bekannt sind. Alternativ oder zusätzlich sind die Schneiden geometrisch unbestimmte Schneiden. Dies liegt beispielsweise vor, wenn die Schneidenanzahl, und die Lage zum Werkstück nur über statistische Kenngrößen beschreibbar sind.

Erfindungsgemäß wird die zweite Aufgabe mit der Angabe eines Verfahrens zur Herstellung einer oben genannten Elektrode zur Bearbeitung eines Werkstücks mit den folgenden Schritten gelöst:
- Bereitstellen einer Grundelektrode, mit einem zu dem Werkstück weisenden Endabschnitt, welcher ein zu einem thermischen Abtrag, insbesondere zu einem funkenerosiven Abtrag, geeignetes Material und einen Schneidstoff aufweist,
- Anbringen von geometrisch bestimmten Schneiden und/oder geometrisch unbestimmten Schneiden zumindest in eine Stirnfläche des Endabschnitts, so dass zumindest ein abrasiver, spanender Abtrag als auch ein thermisch, nichtmechanischer Abtrag des Werkstücks gleichzeitig ermöglich wird.

Mit dem erfindungsgemäßen Verfahren können nun auf einer Erodiermaschine mit der Elektrode selbst in einem Zweischrittverfahren Kühlluftbohrungen in ein heißgasführendes Werkstück mit einer elektrisch nicht leitenden keramischen Wärmedämmschicht gebohrt werden. Dies verbessert die Wirtschaftlichkeit der Bearbeitung, da das Werkstück im Vergleich zum Stand der Technik nun nicht mehr maskiert, und dann keramisch beschichtet werden muss, sondern nach der Komplettbeschichtung in einem Arbeitsgang gebohrt werden kann. Die Qualität des Bearbeitungsergebnisses wird ebenfalls verbessert, da die Bohrung im Bereich der Keramik und des Werkstücks fehlerlos in vorgewählter Geometrie durchgeführt werden kann, während beim Maskierverfahren dort immer starke Unstetigkeiten entstehen, die negativen Einfluss auf die Kühlwirkung und die Integrität der Schichtanbindung haben können. Die Bearbeitungszeit wird aufgrund der vereinfachten technischen Abläufe und der verschlankten Logistik ebenfalls verkürzt.

Bevorzugt wird das Anbringen der geometrisch bestimmten Schneiden und/oder der geometrisch unbestimmten Schneiden durch eine Abrichteinheit durchgeführt. Da die Schneiden der Elektrode während des Keramikbohrens stumpf werden und die Elektrode beim Erodieren weiteren Verschleiß (Abbrand) erfährt, wird vor dem Bohren der nächsten Bohrung die automatisch nachgeführte Elektrode bzw. eine neu eingewechselte Elektrode mittels einer Abrichteinheit erneut mit einer Schneidengeometrie versehen. Dies ist ein sehr einfaches Verfahren zum Herstellen einer solchen Elektrode.

In bevorzugter Ausgestaltung wird das Abrichten durch die Abrichteinheit nach dem Prinzip des Senkerodierens oder/und Drahterodierens oder/und mit Abrichtrollen durchgeführt. Dazu kann eine Erodiermaschine verwendet werden, wie sie auch zum Bearbeiten des Werkstücks verwendet wird.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:
- FIG 1:: einen Querschnitt einer erfindungsgemäßen ersten Elektrode 1,
- FIG 2:: einen Querschnitt einer erfindungsgemäßen zweiten Elektrode 100.

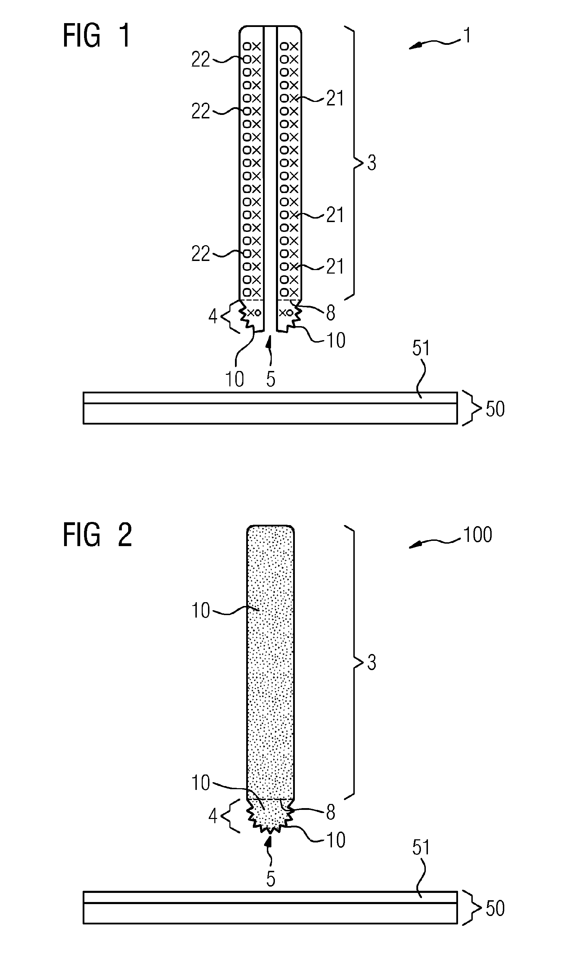

FIG 1 zeigt einen Querschnitt einer ersten erfindungsgemäßen Elektrode 1. Diese ist insbesondere eine Stab- bzw. Rohrelektrode. Diese erste erfindungsgemäße Elektrode 1 umfasst ein zum Abtrag geeignetes Material 22 als auch einen Schneidstoff 21. Dabei kann als Schneidstoff 21 beispielsweise Diamant, Bornitrid, Werkzeugstähle, Sinterwerkstoffe, Schneidkeramik, Korund oder Diamant verwendet werden. Dabei ist das zum Abtrag geeignete Material 22 beispielsweise Kupfer und/oder eine Kupferlegierung oder ein anderes Material mit hohem Schmelzpunkt und hoher elektrischen Leitfähigkeit. Die Elektrode 1 entspricht einer sogenannten Hybrid-Elektrode. Auch können weitere Materialien in der Elektrode 1 vorgesehen sein. Zudem weist die Elektrode 1 einen Endabschnitt 4 als auch einen Anfangsabschnitt 3 auf. Dieser kann vorab festgelegt werden. Der Endabschnitt 4 weist eine Stirnfläche 5 und einen Endabschnittsumfang 8 auf. Diese sind mit geometrisch bestimmten Schneiden 10 versehen. Selbstverständlich können auch geometrisch unbestimmte Schneiden (nicht gezeigt) vorgesehen sein. Auch kann die gesamte Elektrode 1 mit geometrisch unbestimmten Schneiden 10 sowohl am Anfangsabschnitt 3 als auch am Endabschnitt 4 und/oder mit geometrisch bestimmten Schneiden (nicht gezeigt) am Endabschnitt 4 versehen sein. Auch kann selbstverständlich nur die Stirnfläche 5 mit Schneiden 10 versehen sein.

Dabei haben die geometrisch bestimmte Schneiden 10 eine geometrisch bestimmte Form. Der Endabschnitt 4 weist daher eine exakt definierte Schneidengeometrie auf. Dies bedeutet, dass beispielsweise die Schneidenanzahl, und die Lage der Schneiden 10 zum Werkstück 50 bekannt und beschreibbar sind. Auch kann selbstverständlich der Endabschnitt 4 mehr Schneidstoff 21 aufweisen als Anfangsabschnitt 3 (nicht gezeigt). Dies ist beispielsweise möglich, wenn die Grundelektrode; das heißt die Elektrode 1 vor dem Einbringen der Schneiden 10 durch Sintern gefertigt wird. Dies ist von Vorteil, wenn ein besonders hartes Beschichtungsmaterial, beispielsweise eine harte Keramikschicht 51 auf dem Werkstück 50, vor dem Erodierprozess zerspant bzw. durchbohrt werden muss.

Mit der erfindungsgemäßen Elektrode 1, kann sowohl geschnitten bzw. abgetragen als auch gleichzeitig erodiert werden. Es sind daher nichtmetallische und metallische Werkstücke 50 mit einer solchen Elektrode 1 bearbeitbar.

FIG 2 hingegen zeigt eine Elektrode 100, welche als geeignetes Material 22 und als Schneidstoff 21 ein Hartmetall 10 umfasst; d.h. die Elektrode 100 besteht quasi aus Hartmetall 10. Auch hier weist die Elektrode 100 einen Endabschnitt 4 als auch einen Anfangsabschnitt 3 auf. Der Endabschnitt 4 weist ebenfalls eine Stirnfläche 5 und einen Endabschnittsumfang 8 auf. Diese sind mit geometrisch bestimmten Schneiden 10 versehen. Selbstverständlich können auch hier geometrisch unbestimmte Schneiden 10 vorgesehen sein und/oder nur in der Stirnfläche 5. Nachfolgend werden geometrisch bestimmte oder unbestimmte Schneiden oder eine Kombination aus beiden der einfachhalthalber als Schneiden 10 bezeichnet. Dabei ist das Hartmetall 10 zum Schneiden insbesondere eines mit einer Keramikschicht 51 beschichteten Werkstücks 50 geeignet, da es den notwendigen Härtegrad aufweist. Das Hartmetall 10 in der Elektrode 100 kann jedoch auch zum Erodieren verwendet werden. Dies bedeutet, dass mit einer solchen Elektrode 100, welche im Wesentlichen aus nur einem Metall besteht, gleichzeitig erodiert und geschnitten werden kann. Dabei kann anstatt Hartmetall 10 jeder Werkstoff oder jede Werkstoffkombination verwendet werden, der sich durch eine hohe Härte, metallische Eigenschaften und gute elektrische und thermische Leitfähigkeit auszeichnet.

Werden Beschichtungen aus nichtleitenden Materialien bearbeitet, so ist es vorteilhaft, dass der Schneidstoff 21 oder aber das Hartmetall 10 immer härter als dieses nichtleitende Material ist. Dies gilt auch für eine spanende Bearbeitung eines Werkstücks 50 ohne Beschichtung mit der erfindungsgemäßen Elektrode 1, 100. Die Schneiden 10 können selbstverständlich bei der erfindungsgemäßen Elektrode 1,100 am Anfangsabschnitt 3 und am Endabschnitt 4 angebracht sein.

Mit der erfindungsgemäßen Elektrode 1,100 können nun in einem Zweischrittverfahren beispielsweise Kühlluftbohrungen in ein heißgasführendes Werkstück 50 mit einer elektrisch nichtleitenden, keramischen Wärmedämmschicht 51 gebohrt werden. Dies verbessert die Wirtschaftlichkeit der Bearbeitung. Die Qualität des Bearbeitungsergebnisses wird ebenfalls verbessert, da die Geometrie der Bohrung im Bereich der Keramikschicht 51 nahezu perfekt ausgeführt werden kann, während bei einem Maskierverfahren, wie es im Stand der Technik genannt worden ist, dort immer starke Unstetigkeiten in der Geometrie entstehen, die negativen Einfluss auf die Kühlwirkung und die Integrität der Keramikschichtanbindung an das Werkstück 50 haben können.

Mit der erfindungsgemäßen Elektrode 1,100 ist eine durchgängige Bearbeitung eines keramisch beschichteten Werkstücks 50 ohne Maskierverfahren und/oder den Austausch eines Bearbeitungswerkzeugs möglich. Da die Schneiden 10 der Elektrode 1,100 während des Keramikbohrens stumpf werden und die Elektrode 1,100 beim Erodieren weiteren Verschleiß (Abbrand) erfährt, wird vor dem Bohren der nächsten Bohrung die automatisch nachgeführte Elektrode 1,100 bzw. eine neu eingewechselte Elektrode mittels einer Abrichteinheit erneut mit einer Schneidengeometrie versehen.

Dies spart Material, Zeit und Arbeit. So lässt sich zudem beim Verschleiß der Elektrode 1,100 durch den spanenden Abtrag und den Abbrand bei einer Bohrung durch die Keramikschicht 51, durch eine zugehörige metallische Haftvermittlerschicht und durch das metallische Werkstück 50 sicherstellen, dass nach der Fertigstellung der Bohrung, bei der nächsten Bohrung wieder genügend Schneiden 10 mit einem Schneidstoff 21 für die Bearbeitung der Keramikschicht 51, als auch genügend Material 22 zum thermischen Abtrag in der richtigen Geometrie gebunden, zur Verfügung stehen.

Durch das gleichzeitige Vorhandensein der Schneiden 10 sowie einem zu einem thermischen Abtrag geeigneten Material 22 ist ein abrasiver, spanender Abtrag der Keramikschicht 51 als auch ein thermisch, nichtmechanischer Abtrag des Werkstücks 50 gleichzeitig möglich.

Zur Herstellung dieser Elektrode 1,100 kann direkt vor der Bohrbearbeitung beispielsweise mittels einer in eine Fast-Hole- bzw. Startloch-Erodiermaschine (nicht gezeigt) integrierten Abrichteinheit (nicht gezeigt) nach dem Prinzip des Senk- oder Drahterodierens, aber auch mittels einer Abrichteinheit (nicht gezeigt) mit rotierenden Abrichtrollen (nicht gezeigt) eine Schneidengeometrie in die Stirnfläche 5 und beispielsweise die Umfangsfläche 8 der Elektrode 1,100 eingebracht werden. Diese kann eine geometrisch bestimmte Form haben, oder auch, z.B. durch Abrichten auf einer sehr rauen Platte (nicht gezeigt) mittels Senkerodieren mit geometrisch unbestimmten Schneiden versehen werden. Dabei können die geometrisch unbestimmten Schneiden einem stochastischen Zahnfeld, gewissermaßen einem sehr groben Sandpapier ähneln.

Mit den geometrisch un-/bestimmten Schneiden 10 wird nun durch die Rotation der Elektrode 1,100 und mit einem Vorschub zu Beginn des Bohrens zuerst die keramische Wärmedämmschicht 51 trennend bearbeitet. Wird die Bearbeitung in einem Dielektrikum (nicht gezeigt) durchgeführt, so kann eine Spülung, insbesondere eine Druckspülung, der Elektrode 1,100 mit diesem Dielektrikum (nicht gezeigt) schon während des Bearbeitens der Keramikschicht 51 zur Kühlung der Elektrode 1,100 und des Werkstücks 50 selber und zum Fortspülen der Abtragsprodukte verwendet werden. Sobald die Keramikschicht 51 durchbohrt ist und das elektrisch leitende Metall des Werkstücks 50 freiliegt, startet der Erodierprozess wie sonst bei metallischen Werkstoffen üblich. Da die Schneiden 10 der Elektrode 1,100 während des Keramikbohrens stumpf werden und die Elektrode 1,100 beim Erodieren weiteren Verschleiß, beispielsweise durch Abbrand erfährt, wird vor dem Bohren der nächsten Bohrung die automatisch nachgeführte Elektrode bzw. eine neu eingewechselte Elektrode mittels der oben beschriebenen Abrichteinheit (nicht gezeigt) erneut mit einer Schneidengeometrie versehen.

## Patentansprüche

1. Elektrode (1,100) zur Bearbeitung eines Werkstücks (50), welche einen dem zu bearbeitenden Werkstück (50) zugewandten Endabschnitt (4,24) mit einer Stirnfläche (5) aufweist,
**dadurch gekennzeichne** t, **dass,**
am Endabschnitt (4) zumindest teilweise über die Stirnfläche (5) Schneiden vorgesehen sind, wobei die Schneiden (10) zumindest teilweise einen Schneidstoff (22) umfassen und wobei der Endabschnitt (4) ein zu einem thermischen Abtrag, insbesondere ein zu einem funkenerosiven Abtrag, geeignetes Material (22) umfasst, so dass zumindest ein abrasiver, spanender Abtrag als auch ein thermisch, nichtmechanischer Abtrag des Werkstücks (50) gleichzeitig möglich ist.

2. Elektrode nach Anspruch 1,
**dadurch gekennzeichnet, dass**
die Elektrode (1) zum thermisch, nichtmechanischen Abtrag des Werkstücks (50) als Material (22) ein elektrisch gut leitfähiges Metall mit relativ hohem Schmelzpunkt umfasst.

3. Elektrode nach Anspruch 2,
**dadurch gekennzeichnet, dass**
das Material (22) ein Hartmetall, insbesondere eine Wolfram-Kupfer-Legierung umfasst.

4. Elektrode nach Anspruch 1,
**dadurch gekennzichnet, dass**
der Schneidstoff (21) einen Werkzeugstahl und/oder eine Schneidkeramik, und/oder Korund oder und/oder Diamant umfasst.

5. Elektrode nach einem der vorhergehenden Ansprüche,
**dadurch gekennzeichnet, dass**
der Endabschnitt (4) einen Endabschnittumfang (8) umfasst, an welchem Schneiden (10) vorgesehen sind.

6. Elektrode nach Anspruch 1,
**dadurch gekennzeichnet, dass**
der Schneidstoff (21) und Material (22) dasselbe Hartmetall (10) umfassen.

7. Elektrode nach einem der vorhergehenden Ansprüche,
**dadurch gekennzeichnet, dass**
die Schneiden (10) geometrisch bestimmte Schneiden (10) sind.

8. Elektrode nach einem der vorhergehenden Ansprüche 1-6,
**dadurch gekennzeichnet, dass**
die Schneiden geometrisch unbestimmte Schneiden sind.

9. Verfahren zur Herstellung einer Elektrode (1,100) zur Bearbeitung eines Werkstücks (50) nach einem der Ansprüche 1-8, mit den folgenden Schritten:
- Bereitstellen einer Grundelektrode, mit einem zu dem Werkstück (50) weisenden Endabschnitt (8), welcher ein zu einem thermischen Abtrag, insbesondere zu einem funkenerosiven Abtrag, geeignetes Material (22) und einen Schneidstoff (21) aufweist;
- Anbringen von geometrisch bestimmten Schneiden (10) und/oder geometrisch unbestimmten Schneiden zumindest in eine Stirnfläche (5) des Endabschnitts (8), so dass zumindest ein abrasiver, spanender Abtrag als auch ein thermisch, nichtmechanischer Abtrag des Werkstücks (50) gleichzeitig ermöglich wird.

10. Verfahren nach Anspruch 9,
**dadurch gekennzeichnet, dass**
das Anbringen der geometrischen bestimmten Schneiden (10) und/oder der geometrischen unbestimmten Schneiden durch eine Abrichteinheit durchgeführt wird.

11. Verfahren nach Anspruch 10,
**dadurch gekennzeichnet, dass**
das Abrichten durch die Abrichteinheit nach dem Prinzip des Senkerodierens und/oder Drahterodierens und/oder mit Abrichtrollen durchgeführt wird.
